Europäisches Patentamt

European Patent Office

Office européen des brevets

(19)

(11) **EP 1 257 101 A1**

(12) **EUROPÄISCHE PATENTANMELDUNG**

(43) Veröffentlichungstag:
**13.11.2002 Patentblatt 2002/46**

(51) Int Cl.⁷: **H04L 25/02**

(21) Anmeldenummer: **01111003.8**

(22) Anmeldetag: **07.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Baier, Paul Walter, Prof.**
**67661 Kaiserslautern (DE)**
• **Oster, Jochen**
**67663 Kaiserslautern (DE)**
• **Weber, Tobias**
**67731 Otterbach (DE)**

(54) **Störungsunterdrückung mit einer geschrumpften Mittambelmatrix**

(57)     Es werden aus einem Empfangsvektor ($\underline{e}_m$), welcher Empfangsignalanteile von a priori bekannten gesendeten Pilotsignalen von allen Mobilfunk-Teilnehmer in einer Referenzzelle und in benachbarten Gleichkanalzellenzellen enthält, erste Schätzungen ($\underline{h}^{(i)}$) der Kanalimpulsantworten in der Referenzzelle ermittelt.

Dann werden anhand dieser ersten Schätzungen ($\underline{h}^{(i)}$) der Kanalimpulsantworten mittels eines vorgegebenen Auswahlkriteriums mehrere Abtastwerte der Kanalimpulsantworten der Teilnehmer in der Referenzzelle ausgewählt. Anschließend wird eine geschrumpfte Mittambelmatrix ($\underline{G}$) gebildet.

FIG 1

EP 1 257 101 A1

**Beschreibung**

Die mobile Kommunikation hat durch den technischen Fortschritt insbesondere in der Übertragungstechnik und in der Mikroelektronik in der letzten Zeit ständig an Bedeutung gewonnen. Mobilfunknetze, welche die Mobilität der Anwender gewährleisten, haben gegenüber leitungsgebundenen Kommunikationsnetzen den weiteren Vorteil, dass sie auch dort eingesetzt werden können, wo eine Verkabelung unmöglich oder unwirtschaftlich ist.

Die Kapazität von Mobilfunknetzen wird durch das zur Verfügung stehende begrenzte Frequenzspektrum, durch die physikalischen Eigenschaften der Funkwellen sowie durch die Ausbreitung der Funkwellen durch die Erdatmosphäre bestimmt. Die Entwicklung von Mobilfunknetzen wurde insbesondere von der begrenzten Ressource Frequenzspektrum geprägt. In modernen Mobilfunksystemen wird deshalb die von dem Mobilfunknetz abgedeckte Fläche in einzelne Zellen unterteilt, die i.a. als regelmäßige Sechsecke ausgebildet sind. In der Mitte einer jeden Zelle befindet sich eine ortsfeste Basisstation, welche mit den aktuell in der Zelle befindlichen betriebsbereiten Mobilstationen kommuniziert. Aufgrund der Funkfelddämpfung mit steigendem Abstand zwischen Sender und Empfänger ist es möglich, dass hinreichend weit voneinander entfernte Zellen das gleiche Teilfrequenzband des gesamten zur Verfügung stehenden Frequenzspektrums verwenden. Zellen, welche das gleiche Teilfrequenzband verwenden werden in diesem Zusammenhang üblicherweise als Gleichkanalzellen bezeichnet. Durch die Verwendung von Gleichkanalzellen ist es möglich, die Kapazität und insbesondere die maximale Anzahl von betriebsbereiten mobilen Teilnehmern in dem Mobilfunknetz wesentlich zu erhöhen.

Die Effizienz der Funkübertragung konnte ferner durch den Übergang von analogen zu digitalen Mobilfunknetzen gesteigert werden. In diesem Zusammenhang spielen Vielfachzugriffsverfahren (Multiplexverfahren) wie Frequenzmultiplex (FDM, Frequenz Division Multiplex), Zeitmultiplex (TDM, Time Division Multiplex) oder Codemultiplex (CDM, Code Division Multiplex) eine wichtige Rolle, mittels welcher eine deutlich höhere Anzahl von Mobilfunk-Teilnehmern bedient werden können. Eine Beschreibung der genannten Vielfachzugriffsverfahren findet sich z.B. in [1].

Bei zellulären Mobilfunksystemen unterscheidet man zwischen zwei Arten von Störungen, welche sich negativ auf die Übertragungsqualität auswirken: Intrazellinterferenz und Interzellinterferenz. Intrazelluläre Störungen werden von Funkwellen verursacht, deren Sender sich in der gleichen Zelle wie der gestörte Empfänger befindet. Im Gegensatz dazu bezeichnet man mit Interzellinterferenz den Fall, dass sich die Störquelle in einer anderen Zelle wie der gestörte Empfänger befindet.

Um die physikalischen Übertragungskanäle der Funkwellen zwischen Basisstation und Mobilstation zu charakterisieren, verwendet man in TDMA-basierten Mobilfunksystemen in der Regel sogenannte Mittambel-Codes. Ein solcher Mittambel-Code - oft auch einfach als Mittambel bezeichnet - ist eine in der Mitte eines Bursts angeordnete Trainingssequenz von Testsignalen, die dem Empfänger a priori bekannt ist. Unter einem Burst ist im Weiteren ein zeitlich begrenzter Sendeabschnitt zu verstehen, in dem eine Datenfolge mit einer vorgegebenen Anzahl von Bits übertragen wird. Üblicherweise hat ein Burst eine Länge von 148 bit. Wenn die zu übertragenden Nachrichten eine Datenfolge aufweisen, die länger als ein Burst ist, dann wird die zu übertragende Nachricht auf mehrere Bursts aufgeteilt und zeitlich nacheinander übertragen. Anhand der empfangenen Mittambel kann der Empfänger die Impulsantwort des entsprechenden Funkkanals abschätzen und mit diesem Wissen über die physikalische Ausbreitung der Funkwellen die in demselben Burst übertragenen Daten bestimmen.

Aus [2] ist ein Verfahren zum Reduzieren der Interzellinterferenz bekannt, bei dem für die Referenzzelle ein Schätzverfahren für die Kanalimpulsantworten eingesetzt wird, welches auf den Mittambel-Grundcode der Referenzzelle angepasst ist.

Der Erfindung liegt das Problem zugrunde, ein Verfahren zur Bestimmung einer Generatormatrix zu schaffen, mittels welcher eine gegenüber herkömmlichen Verfahren verbesserte Ermittlung von Kanalimpulsantworten bei einem auf den Vielfachzugriffsverfahren Zeitmultiplex und/oder Codemultiplex basierenden Mobilfunksystem erreicht werden kann.

Dieses Problem wird gelöst durch das erfindungsgemäße Verfahren zur Bestimmung einer Generatormatrix, welche im folgenden als geschrumpfte totale Mittambelmatrix bezeichnet wird, bei dem aus einem Empfangsvektor, welcher Empfangsignalanteile von a priori bekannten gesendeten Pilotsignalen von allen Mobilfunk-Teilnehmern in einer Referenzzelle und in um die Referenzzelle umliegenden Gleichkanalzellen enthält, erste Schätzungen der Kanalimpulsantworten oder Schätzungen von charakteristischen Eigenschaften der Kanalimpulsantworten für die Teilnehmer in der Referenzzelle und/oder in den umliegenden Gleichkanalzellen ermittelt werden, anhand der ersten Schätzungen der Kanalimpulsantworten oder der Schätzungen der charakteristischen Eigenschaften der Kanalimpulsantworten mittels eines vorgegebenen Auswahlkriteriums mehrere Abtastwerte der Kanalimpulsantworten der Teilnehmer in der Referenzzelle und/oder in den umliegenden Gleichkanalzellen ausgewählt werden, und eine geschrumpfte totale Mittambelmatrix gebildet wird, in der nur die zu den ausgewählten Kanalimpulsantwort-Abtastwerten gehörenden Spalten einer totalen Mittambelmatrix enthalten sind, welche totale Mittambelmatrix die a priori bekannten teilnehmerspezifischen Pilotsignale sämtlicher Teilnehmer in der Referenzzelle und in den umliegenden Gleichkanalzellen aufweist. Damit schafft die Erfindung die grundlegende Voraussetzung dafür, dass eine aufgefüllte Kanalimpulsantwort bestimmt werden kann, bei der auch diejenigen interzellulären Störsignale berücksichtigt sind, welche entsprechend einem vorgegebenen Auswahlkriterium signifikant zur Interzellinterferenz beitragen. Eine derartige aufgefüllte Kanalimpulsantwort stellt wiederum die Voraussetzung für eine qualitativ verbesserte und zugleich auch schnelle Bestimmung der übertragenen Daten dar. Die hohe Geschwindigkeit der Datenbestimmung wird durch Reduktion der Dimension der geschrumpften totalen Mittambelmatrix im Vergleich zu der totalen Mittambelmatrix gewährleistet.

In einer Ausführungsform der Erfindung sind die zur ersten Kanalschätzung verwendeten Pilotsignale die Mittambel-Codes eines oder mehrerer aufeinanderfolgender Bursts. Somit kann das erfindungsgemäße Verfahren auf bekannte Signalstrukturen in TDMA Mobilfunksystemen zurückgreifen.

Bei anderen Ausführungsformen der Erfindung können die Pilotsignale statt Mittambel-Codes auch andere Arten von Trainingssequenzsen sein, wie z.B. Präambeln oder Postambeln.

In einer anderen Ausführungsform der Erfindung sind die zur ersten Kanalschätzung verwendeten Pilotsignale zusätzlich gesendete schmal- oder breitbandige Signatursignale. Damit bietet die Erfindung die vorteilhafte Möglichkeit mittels der Verwendung von zusätzlichen Signatursignalen eine verbesserte Kanalschätzung zu erzielen.

Gemäß einer weiteren Ausführungsform der Erfindung erfolgt die erste Kanalschätzung mittels einer signalangepassten Filterung, einer Maximum Likelihood Kanalschätzung und/oder einer Minimum Mean Square Error Schätzung, so dass das erfindungsgemäße Verfahren auf bekannte Algorithmen zur Kanalbestimmung zurückgreifen kann.

Gemäß einer Weiterbildung der Erfindung wird als charakteristische Eigenschaft der Kanalimpulsantwort die Energie der Kanalimpulsantwort verwendet. Die Energie der Kanalimpulsantwort stellt eine relativ einfach zu bestimmende Messgröße dar, mittels der die Auswahl der für das weitere Verfahren relevanten Abtastwerte der Kanalimpulsantworten bestimmt werden kann.

Gemäß einer anderen Weiterbildung der Erfindung werden als charakteristische Eigenschaft der Kanalimpulsantwort die Energien der Kanalimpulsantwort-Abtastwerte verwendet. Die Energien der Kanalimpulsantwort-Abtastwerte stellen einen Satz von Messgrößen dar, mittels derer eine präzisere Auswahl der für das weitere Verfahren relevanten Abtastwerte der Kanalimpulsantworten bestimmt werden kann.

Gemäß einer weiteren Ausführungsform der Erfindung besteht das Auswahlkriterium darin, dass diejenigen Kanalimpulsantwort-Abtastwerte ausgewählt werden, deren geschätzte Energie eine bestimmte Schwelle überschreitet oder deren geschätzte Energie zu einer vorgegebenen Anzahl an größten geschätzten Energien gehört. Somit kann auf vorteilhafte Weise sichergestellt werden, dass für das weitere Verfahren stets eine angemessene Anzahl von Kanalimpuls-Abtastwerten verwendet und gleichzeitig eine verlängerte Verarbeitungszeit des erfindungsgemäßen Verfahrens aufgrund von zu vielen ausgewählten Kanalimpuls-Abtastwerten vermieden wird.

In einer weiteren Ausführungsform wird das erfindungsgemäße Verfahren zur Bestimmung einer aufgefüllten Kanalimpulsantwort eingesetzt. Dabei wird aus dem Empfangsvektor und aus der geschrumpften totalen Mittambelmatrix mittels eines Kanalschätzverfahrens eine geschrumpfte totale Kanalimpulsantwort bestimmt und aus der geschrumpften totalen Kanalimpulsantwort unter Verwendung der ausgewählten Kanalimpulsantwort-Abtastwerte die aufgefüllte Kanalimpulsantwort bestimmt.

Die Bestimmung einer derartigen aufgefüllten Kanalimpulsantwort hat den Vorteil, dass in der derartigen aufgefüllten Kanalimpulsantwort auch diejenigen Signale von Interzellinterferenz berücksichtigt sind, welche entsprechend dem vorgegebenen Auswahlkriterium zur Interzellinterferenz beitragen.

Gemäß einer vorteilhaften Ausführungsform wird die geschrumpfte totale Kanalimpulsantwort mittels einer signalangepassten Filterung, einer Maximum Likelihood Kanalschätzung und/oder einer Minimum Mean Square Error Schätzung bestimmt. Damit hat das erfindungsgemäße Verfahren den Vorteil, dass auf bekannte Kanalschätzverfahren zurückgegriffen werden kann.

Gemäß einer weiteren vorteilhaften Ausführung wird die aufgefüllte Kanalimpulsantwort dadurch bestimmt, dass zu der geschrumpften totalen Kanalimpulsantwort Nullmatrizen hinzugefügt werden, welche die nicht einbezogenen Signale der Interzellinterferenz repräsentieren. Somit wird auf einfache Weise die Dimension der aufgefüllten Kanalimpulsantwort erhöht, so dass für die folgenden Verfahrensschritte herkömmliche Algorithmen verwendet werden können.

In einer weiteren Ausführungsform wird das erfindungsgemäße Verfahren zur Bestimmung der übertragenen Daten eingesetzt. Dabei wird der Empfangsvektor aus einem empfangenen Gesamtsignal selektiert, indem diejenigen Bestandteile des empfangenen Gesamtsignals selektiert werden, welche die Pilotsignalanteile aus der Referenzzelle und aus den umliegenden Gleichkanalzellen enthalten. Somit können die empfangenen Pilotsignalanteile unabhängig von den empfangenen Daten ausgewertet werden, wodurch der Ablauf des erfindungsgemäßen Verfahrens wesentlich übersichtlicher wird.

Gemäß einer weiteren vorteilhaften Ausführungsform wird unter Verwendung der aufgefüllten Kanalimpulsantwort aus dem empfangenen Gesamtsignal ein Empfangssignal ermittelt, indem diejenigen Bestandteile des empfangenen Gesamtsignals eliminiert werden, welche die Pilotsignalanteile aus den umliegenden Gleichkanalzellen enthalten. Damit können die empfangenen Daten von den empfangenen Pilotsignalanteilen separiert werden, wobei bei dieser Separation die interzellulären Störsignale berücksichtigt werden.

In einer anderen Ausführungsform der Erfindung wird aus dem Empfangssignal unter Verwendung der ausgewählten Kanalimpulsantwort-Abtastwerte und der aufgefüllten Kanalimpulsantwort eine Datenmatrix bestimmt, welche die zu bestimmenden übertragenen Daten aufweist. Damit ist eine gegenüber herkömmlichen Verfahren verbesserte Bestimmung der übertragenen Daten möglich.

Gemäß einer vorteilhaften Weiterbildung wird die Datenmatrix unter Verwendung eines Multi-Step Joint Detection Verfahrens, insbesondere eines zweistufigen Multi-Step Joint Detection Verfahrens bestimmt. Damit wird auf vorteilhafte weise auf bekannte Verfahren zur Datenbestimmung zurückgegriffen.

Die Erfindung offenbart ferner eine Vorrichtung zum Bestimmen einer geschrumpften totalen Mittambelmatrix bei zellulären Zeitmultiplex/Codemultiplex Mobilfunksystemen mittels eines Prozessors, der derart eingerichtet ist, dass die oben beschriebenen Verfahrensschritte durchführbar sind.

Die Erfindung offenbart außerdem ein Computerprogramm oder ein Element eines Computerprogramms, welches einen Computer dazu veranlasst, eine Prozedur auszuführen, welche die oben beschriebenen Schritte aufweist.

Die Erfindung offenbart zusätzlich ein computerlesbares Speichermedium mit einem gespeicherten Programm oder einem gespeicherten Programmelement, wobei das Programm oder das Programmelement den Computer dazu veranlasst, eine Prozedur auszuführen, welche die oben beschriebenen Schritte aufweist.

An dieser Stelle sei angemerkt, dass sämtliche in den abhängigen Ansprüchen offenbarte Weiterbildungen auch für eine Vorrichtung, ein Computerprogramm und ein computerlesbares Speichermedium gelten.

Ein Ausführungsbeispiel der Erfindung ist in der Zeichnung dargestellt und wird im Weiteren näher erläutert.

Figur 1    zeigt ein Blockschaltbild der erfindungsgemäßen Empfangssignalverarbeitung zur Reduktion der Interzellinterferenz.

Figur 2    zeigt schematisch die zelluläre Aufteilung eines flächendeckenden Mobilfunknetzes in Form von regelmäßigen Sechsecken. In der Mitte jeder Zelle befindet sich eine Basisstation, die mit den in der gleichen Zelle befindlichen und betriebsbereiten Mobilfunkstationen kommuniziert.

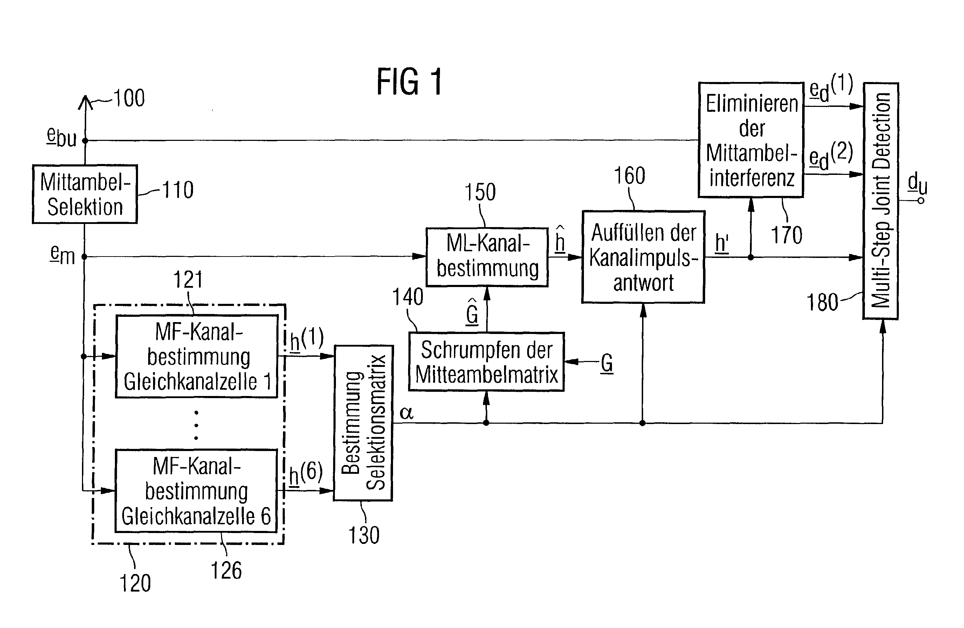

Ein Ausführungsbeispiel des Verfahrens zur Bestimmung einer geschrumpften totalen Mittambelmatrix $\hat{\underline{G}}$ bei zellulären Zeitmultiplex/Codemultiplex Mobilfunksystemen ist in Figur 1 als Blockschaltbild dargestellt. In das in Figur 1 gezeigte Blockschaltbild sind ferner diejenigen Verfahrensschritte mit aufgenommen, die zu einer Bestimmung der aufgefüllten Kanalimpulsantwort $\underline{h}'$ mittels der geschrumpften totalen Mittambelmatrix $\hat{\underline{G}}$ und zu einer Bestimmung der übertragenen Daten $\underline{d}_u$ mittels der aufgefüllten Kanalimpulsantwort $\underline{h}'$ führen.

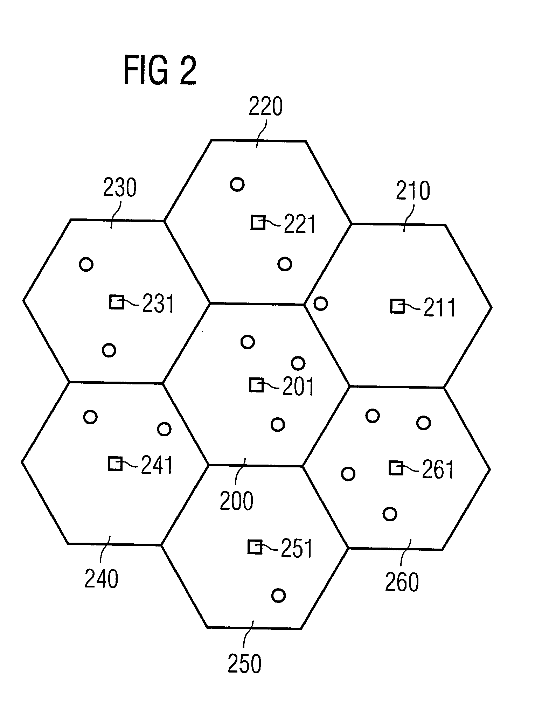

Das erfindungsgemäße Verfahren wird im folgenden für ein zelluläres Mobilfunksystem zur Versorgung eines ausgedehnten Gebietes beschrieben, bei dem an jede Zelle sechs sogenannte Nachbarzellen direkt angrenzen und bei denen die Zellen vorzugsweise in Form von regelmäßigen Sechsecken ausgebildet sind. Eine derartiges zellulares Mobilfunksystem zur Aufteilung eines flächendeckenden Mobilfunknetzes ist in Figur 2 schematisch dargestellt. In der Mitte jeder Zelle 200, 210, 220, 230, 240, 250, 260 befindet sich eine Basisstation 201, 211, 221, 231, 241, 251, 261, die mit den in der gleichen Zelle befindlichen und betriebsbereiten Mobilfunkstationen kommuniziert. Die folgende Beschreibung des erfindungsgemäßen Verfahrens verwendet die Zelle 200 als Referenzzelle. Damit sind die Zellen 210, 220, 230, 240, 250, 260 Nachbarzellen, welche direkt an die Referenzzelle 200 angrenzen. Die in Figur 2 dargestellte zelluläre Struktur, bei der alle nicht direkt an die Referenzzelle 200 angrenzenden Nachbarzellen nicht dargestellt sind, stellt somit nur einen Ausschnitt eines größeren flächendeckenden Gebietes dar, in welchem eine Vielzahl von Zellen um die Referenzzelle 200 herum angeordnet sind. Wie in [3] erläutert, sind bei einer derartigen hexagonalen Anordnung von sechseckigen Zellen unabhängig von dem sogenannten Reuse-Faktor immer genau sechs nächste sogenannte Gleichkanalzellen um die Referenzzelle 200 herum angeordnet.

In dem in Figur 2 skizzierten beispielhaft angenommenen Mobilfunkszenario befinden sich in der Referenzzelle 200 drei, in der Nachbarzelle 210 eine, in der Nachbarzelle 220 zwei, in der Nachbarzelle 230 zwei, in der Nachbarzelle 240 zwei, in der Nachbarzelle 250 eine und in der Nachbarzelle 260 vier betriebsbereite Mobilstationen. Zu der interzellulären Störung des von der Basisstation 201 empfangenen Gesamtsignals tragen allerdings insbesondere diejenigen Mobilfunksender bei, die sich in den sechs in Figur 2 nicht dargestellten nächsten Gleichkanalzellen befinden.

Mittels des erfindungsgemäßen Verfahrens kann der Einfluss derjenigen Mobilstationen auf die Kanalimpulsantwort abgeschätzt werden, die sich in den sechs nächsten Gleichkanalzellen befinden und deren Störsignale gemäß einem vorgegebenen Auswahlkriterien signifikant zu der Störung des von der Basisstation 201 empfangenen Gesamtsignals beitragen.

An dieser Stelle sei jedoch angemerkt, dass das erfindungsgemäße Verfahren zur Bestimmung einer geschrumpften totalen Mittambelmatrix $\hat{\underline{G}}$ auch bei anderen zellulären Mobilfunksystemen angewendet werden kann, die Referenzzellen mit mehr als sechs oder mit weniger als sechs direkt angrenzenden Nachbarzellen aufweisen.

Das erfindungsgemäße Verfahren beginnt mit dem Empfang eines Gesamtsignals $\underline{e}_{bu}$ mittels einer in das Blockdiagramm von Figur 1 schematisch dargestellten Antenne 100, welche zu der in der Mitte der Referenzzelle 200 angeordneten Basisstation 201 gehört. Das Gesamtsignal $\underline{e}_{bu}$ repräsentiert die Superposition aller Funksignale, welche von sämtlichen Mobilfunksendern emittiert werden, die mit dem Empfänger kommunizieren. Demzufolge enthält das Gesamtsignal $\underline{e}_{bu}$ neben den zu übertragenden Daten auch die Signalanteile der a priori bekannten Mittambel-Codes aller Mobilfunkteilnehmer, die sich in der Referenzzelle oder in den umliegenden Nachbarzellen, insbesondere in den um die Referenzzelle 200 umliegenden nächsten Gleichkanalzellen befinden.

Für die erfindungsgemäße Bestimmung der geschrumpften totalen Mittambelmatrix $\underline{\hat{G}}$ wird aus dem empfangenen Gesamtsignal $\underline{e}_{bu}$ in einem Verfahrensschritt 110 ein mittambelbasierter Empfangsvektor $\underline{e}_m$ an der Basisstation der Referenzzelle 200 ermittelt, indem ausschließlich alle diejenigen Bestandteile aus dem von der Antenne 100 empfangenen Gesamtsignal $\underline{e}_{bu}$ ausgewählt werden, welche Mittambel-Signalanteile von Mobilfunksendern in der Referenzzelle 200 und in den um die Referenzzelle 200 umliegenden nächsten Gleichkanalzellen enthalten.

$$\underline{e}_m = \underline{e}_m^{(0)} + \sum_{k_N=1}^{K_N} \underline{e}_m^{(k_N)}, \tag{1}$$

Dabei steht $\underline{e}_m^{(0)}$ für den mittambelbasierten Empfangsvektor, welcher von denjenigen Mobilstationen verursacht wird, die sich betriebsbereit in der Referenzzelle 200 befinden. $\underline{e}_m^{(k_N)}$ stehen für die mittambelbasierten Empfangsvektoren, welche von denjenigen betriebsbereiten Mobilstationen verursacht werden, die sich in den relativ zu der Referenzzelle 200 nächstliegenden Gleichkanalzellen befinden. Der Laufindex $k_N$ durchläuft die natürlichen Zahlen eins, zwei, drei, vier, fünf und sechs. Der Empfangsvektor $\underline{e}_m$ ist frei von all denjenigen Signalanteilen, welche übertragene Daten repräsentieren.

In einem nächsten Schritt 120 wird aus dem Empfangsvektor $\underline{e}_m$ für jede der sechs nächstliegenden Gleichkanalzellen mittels eines Schätzverfahrens jeweils mehrere für die Interzellinterferenz signifikante Abtastwerte ermittelt, welche eine kombinierte Kanalimpulsantwort $\underline{h}^{(i)}$ ergeben.

$$\underline{h}^{(i)} = \left( \underline{h}_1^{(1,i)}, \ldots, \underline{h}_W^{(1,i)}, \ldots, \underline{h}_1^{(k,i)}, \ldots, \underline{h}_W^{(k,i)}, \ldots, \underline{h}_1^{(K,i)}, \ldots, \right.$$
$$\left. \underline{h}_W^{(K,i)} \right), \text{ wobei } k = 1..K \text{ und } i \in \{0,1,\ldots,K_N\}, \tag{2}$$

Dabei sind $\underline{h}_n^{(m,l)}$ ($n = 1,2,...W$, $m = 1,2,...K$) die Kanalimpulsantworten aller K betriebsbereiten Mobilfunkteilnehmer in einer bestimmten Gleichkanalzelle i. Die Ermittlung von $\underline{h}_n^{(m,l)}$ ist in [4] im Detail beschrieben. Die kombinierte Kanalimpulsantwort $\underline{h}^{(i)}$ enthält Informationen über die physikalische Ausbreitung der Funkwellen, die von allen in der entsprechenden Gleichkanalzelle i befindlichen Mobilfunksendern emittiert und die von dem in der Referenzzelle befindlichen Empfänger detektiert werden. Gemäß dem hier erläuterten Ausführungsbeispiel wird zur Bestimmung der kombinierten Kanalimpulsantworten $\underline{h}^{(i)}$ eine sogenannte signalangepasste Filterung (Matched Filter, MF) verwendet. Die signalangepasste Filterung, welche z.B. in [4] näher beschrieben ist, benötigt keinerlei Kenntnis über die Art der Störung oder die Eigenschaften der Kanalimpulsantworten, sie beruht einzig auf der a priori Kenntnis der beteiligten Mittambel-Codes. Wie aus Figur 1 ersichtlich, werden im dem vorgestellten Ausführungsbeispiel der Erfindung in dem Schritt 120 die kombinierten Kanalimpulsantworten $\underline{h}^{(i)}$ für jede Gleichkanalzelle i parallel bestimmt. Aus Gründen der Übersichtlichkeit sind allerdings nur der Schritt 121, d.h. die Bestimmung der kombinierten Kanalimpulsantwort $\underline{h}^{(1)}$ und der Schritt 126, d.h. die Bestimmung der kombinierten Kanalimpulsantwort $\underline{h}^{(6)}$ explizit dargestellt. Die analoge Bestimmung von $\underline{h}^{(2)}$, $\underline{h}^{(3)}$, $\underline{h}^{(4)}$ und $\underline{h}^{(5)}$ ist in Figur 1 durch vier schwarze Punkte angedeutet.

In einem weiteren Schritt 130 wird aus den sechs kombinierten Kanalimpulsantworten $\underline{h}^{(i)}$ für jede Gleichkanalzelle i mittels eines vorgegebenen Auswahlkriteriums eine Selektionsmatrix bestimmt. Die Selektionsmatrix weist dabei Steuergrößen $\alpha_{k,k_N}$ auf, welche die für das weitere Verfahren zur Bestimmung einer geschrumpften totalen Mittambelmatrix $\underline{\hat{G}}$ einzubeziehenden Signale der Interzellinterferenz kennzeichnen. Abhängig von den Werten bestimmter Steuergrößen $\alpha_{k,k_N}$ werden bestimmte Störsignale berücksichtigt oder nicht berücksichtigt. Gemäß dem hier beschriebenen Ausführungsbeispiel der Erfindung nehmen die Steuergrößen $\alpha_{k,k_N}$ den Wert Eins an, wenn die Störsignale des Teilnehmers k in der Gleichkanalzelle $k_N$ einbezogen werden sollen und die Steuergrößen $\alpha_{k,k_N}$ nehmen den Wert Null an, wenn die Störsignale des Teilnehmers k in der Gleichkanalzelle $k_N$ nicht einbezogen werden sollen.

In einem weiteren nicht dargestellten Verfahrensschritt wird mittels der nun bekannten Steuergrößen $\alpha_{k,k_N}$ und der a priori bekannten Mittambelmatrix $\underline{G}^{(k,0)}$ der Referenzzelle 200 und der a priori bekannten Mittambelmatrizen $\underline{G}^{(k,k_N)}$ der um die Referenzzelle 200 umliegenden nächsten Gleichkanalzellen die totale Mittambelmatrix $\underline{G}$ gebildet.

$$\underline{G} = \left( \underline{G}^{(1,0)} \ldots \underline{G}^{(k,0)}, \alpha_{1,1}\underline{G}^{(1,1)} \ldots \alpha_{K,1}\underline{G}^{(K,1)}, \alpha_{1,2}\underline{G}^{(1,2)} \ldots, \right.$$
$$\left. \alpha_{K,2}\underline{G}^{(K,2)}, \ldots \alpha_{K,K_N}\underline{G}^{(K,K_N)} \right) \qquad (3)$$

Das Bilden von $\underline{G}$ erfolgt gemäß Gleichung (3) derart, dass Anteile mit $\alpha_{k,k_N}$ gleich Null entfallen und nicht durch Nullmatrizen repräsentiert werden. Die Anzahl der Spalten von $\underline{G}$ ergibt sich mit der Anzahl $K_\alpha$ der nicht verschwindenden Werte $\alpha_{k,k_N}$ zu

$$W_G = W(K + K_\alpha). \qquad (4)$$

Dabei steht K für die Anzahl der betriebsbereiten Mobilfunkteilnehmer in der Referenzzelle 200. W steht für die gesamte Anzahl von zu bestimmenden Kanalkoeffizienten geteilt durch die Anzahl K der betriebsbereiten Mobilfunkteilnehmer in der Referenzzelle 200.

Mit den unabhängig von dem erfindungsgemäßen Verfahren zu bestimmenden Kanalimpulsantworten $\underline{h}^{(k,0)}$ (k = 1...K) der Referenzzelle 200 und den Kanalimpulsantworten $h^{(k,k_N)}$ (k = 1...K, $k_N$ = 1...$K_N$) zwischen den Quellen der Interzellinterferenz und der Basisstation 201 der Referenzzelle 200 (siehe [4]) sowie mit den Steuergrößen $\alpha_{k,k_N}$ erhält man in einem weiteren, in Figur 2 nicht dargestellten Verfahrensschritt die totale Kanalimpulsantwort $\underline{h}$.

$$\underline{h} = \left( \underline{h}^{(1,0)T} \ldots \underline{h}^{(k,0)T}, \alpha_{1,1}\underline{h}^{(1,1)T} \ldots \alpha_{k,1}\underline{h}^{(k,1)T}, \alpha_{1,2}\underline{h}^{(1,2)T} \ldots, \right.$$
$$\left. \alpha_{k,2}\underline{h}^{(k,2)T}, \ldots \alpha_{K,K_N}\underline{h}^{(K,K_N)T} \right)^T \qquad (5)$$

Die Abkürzung "T" steht dabei jeweils für die sogenannte transponierte Matrix, in der Zeilen- und Spaltenvektoren vertauscht sind.

In dem nächsten Schritt 140 wird dann aus der totalen Mittambelmatrix $\underline{G}$ und den Steuergrößen $\alpha_{k,k_N}$ die geschrumpfte totale Mittambelmatrix $\hat{\underline{G}}$ gebildet.

Die Bildung der geschrumpften totalen Mittambelmatrix $\hat{\underline{G}}$ erfolgt dabei erfindungsgemäß dadurch, dass von der totalen Mittambelmatrix $\underline{G}$ nur die zu den ausgewählten Kanalimpulsantwort-Abtastwerten gehörenden Spalten der totale Mittambelmatrix $\hat{\underline{G}}$ verwendet werden. Auf diese Weise ist die Dimension der geschrumpften totalen Mittambelmatrix $\hat{\underline{G}}$ im Vergleich zu der Dimension der totalen Mittambelmatrix $\underline{G}$ reduziert.

Damit ist die erfindungsgemäße Bestimmung der geschrumpften totalen Mittambelmatrix $\hat{\underline{G}}$ bei zellulären Zeitmultiplex/Codemultiplex Mobilfunksystemen abgeschlossen. Im folgenden wird nun erläutert, wie mithilfe der geschrumpften totalen Mittambelmatrix $\hat{\underline{G}}$ die aufgefüllte Kanalimpulsantwort $\underline{h}'$ bestimmt werden kann.

Die Bestimmung der aufgefüllten Kanalimpulsantwort $\underline{h}'$, welche die physikalischen Übertragungskanäle der Funkwellen zwischen Basisstation und allen beteiligten Mobilstationen in der Referenzzelle und in den umliegenden Gleichkanalzellen im Rahmen des erfindungsgemäßen Verfahrens charakterisiert, beginnt mit einem Schritt 150, in welchem zunächst eine geschrumpfte totale Kanalimpulsantwort $\hat{\underline{h}}$ ermittelt wird. Die geschrumpfte totale Kanalimpulsantwort $\hat{\underline{h}}$ charakterisiert dabei die physikalischen Übertragungskanäle der Funkwellen zwischen Basisstation und allen beteiligten Mobilstationen in der Referenzzelle und in den umliegenden Gleichkanalzellen, wobei in den umliegenden Gleichkanalzellen nur diejenigen Störsignale von Mobilstationen berücksichtigt werden, deren Steuergrößen $\alpha_{k,k_N}$ den Wert Eins haben. Gemäß dem hier erläuterten Ausführungsbeispiel der Erfindung wird abhängig von dem Empfangsvektor $\underline{e}_m$ und der geschrumpften totalen Mittambelmatrix $\hat{\underline{G}}$ aus der totalen Kanalimpulsantwort $\underline{h}$ die geschrumpfte totale Kanalimpulsantwort $\hat{\underline{h}}$ mittels einer Maximum-Likelihood (ML) Kanalschätzverfahrens ermittelt, welches z.B. in [4] erläutert ist.

Aus der totalen Kanalimpulsantwort $\underline{h}$ entsteht dabei die geschrumpfte totale Kanalimpulsantwort $\underline{\hat{h}}$ indem man alle verschwindenden Matrixelemente weglässt.

In einem nächsten Schritt 160 wird dann ausgehend von der geschrumpften totalen Kanalimpulsantwort $\underline{\hat{h}}$ und von den Steuergrößen $\alpha_{k,k_N}$ die aufgefüllte Kanalimpulsantwort $\underline{h}'$ bestimmt. Gemäß der Erfindung charakterisiert dabei die aufgefüllte Kanalimpulsantwort $\underline{h}'$ nicht nur die physikalische Funkübertragung zwischen Basisstation 201 und in der Referenzzelle 200 befindlichen Mobilfunkstationen sondern ebenso die Funkübertragung zwischen Basisstation 201 und Mobilfunkstationen, die sich in einer um die Referenzzelle 200 umliegenden Gleichkanalzelle befinden. Dabei sind jedoch erfindungsgemäß nur diejenigen signifikant zur Interzellinterferenz beitragenden Störsignale von Mobilfunkstationen berücksichtigt, deren im Schritt 130 bestimmte Steuergrößen $\alpha_{k,k_N}$ nicht verschwinden. Um trotzdem eine aufgefüllte Kanalimpulsantwort $\underline{h}'$ zu erhalten, die für eine weitere herkömmliche Datenermittlung geeignet ist, wird deshalb in dem Schritt 160 die Dimension der aufgefüllten Kanalimpulsantwort $\underline{h}'$ gegenüber der Dimension der geschrumpften totalen Kanalimpulsantwort $\underline{\hat{h}}$ dadurch erhöht, dass zu der geschrumpften totalen Kanalimpulsantwort $\underline{\hat{h}}$ Nullmatrizen hinzugefügt werden, welche die nicht einbezogenen Störsignale der Interzellinterferenz repräsentieren.

Damit ist erfindungsgemäß die aufgefüllte Kanalimpulsantwort $\underline{h}'$ bestimmt, welche in den im folgenden beschriebenen Verfahrensschritten zu einer gegenüber dem Stand der Technik verbesserten Bestimmung der übertragenen Daten verwendet wird.

Die Bestimmung der übertragenen Daten beginnt erfindungsgemäß mit einem Schritt 170, in dem unter Verwendung der aufgefüllten Kanalimpulsantwort $\underline{h}'$ aus dem empfangenen Gesamtsignal $\underline{e}_m$ ein Empfangssignal $\underline{e}_d$ ermittelt wird, indem diejenigen Bestandteile des empfangenen Gesamtsignals $\underline{e}_{bu}$ eliminiert werden, welche die Mittambel-Signalanteile aus den um die Referenzzelle 200 umliegenden Gleichkanalzellen enthalten.

Die Bestimmung der übertragenen Daten $d_u$ erfolgt gemäß dem hier beschriebenen Ausführungsbeispiel mittel eines zweistufigen Multi-Step Joint Detection Verfahrens 180. In diesem Verfahren 180 werden abhängig von der Selektionsmatrix, der aufgefüllten Kanalimpulsantwort $\underline{h}'$ und dem Empfangssignal $\underline{e}_d$ die übertragenen Daten sämtlicher in der Referenzzelle 200 befindlichen Mobilfunksender bestimmt. Das Multi-Step Joint Detection Verfahren 180 ist ein iteratives Verfahren, bei dem ein und dasselbe Empfangssignal $\underline{e}_d$ mehrfach, d.h. in mehreren Stufen als Eingangsgröße verwendet wird. Im hier beschriebenen Fall eines zweistufigen Multi-Step Joint Detection Verfahrens 180 wird deshalb das Empfangssignal $\underline{e}_d$ zweimal zur Bestimmung der übertragenen Daten benötigt. Diese zweifache Verwendung des Empfangssignal $\underline{e}_d$ ist in Figur 1 durch $\underline{e}_d^{(1)}$ und $\underline{e}_d^{(2)}$ verdeutlicht. Eine ausführlichere Beschreibung des Multi-Step Joint Detection Verfahrens 180 findet sich z.B. in [5].

In diesem Dokument sind folgende Veröffentlichungen zitiert:

[1] P. Jung: Analyse und Entwurf digitaler Mobilfunksysteme; B.G. Teubner, Stuttgart, Deutschland; (1997) Seiten 122-149

[2] B. Steiner, P. W. Baier: Low Cost Channel Estimation in the Uplink Receiver of CDMA Mobile Radio Systems; Frequenz 47 (1993) Seiten 11-12

[3] T. Weber, CDMA Mobilfunksystem; Vorlesungsskript der Universität Kaiserslautern (1999) Seite 3

[4] P. Jung: Analyse und Entwurf digitaler Mobilfunksysteme; B.G. Teubner, Stuttgart, Deutschland; (1997) Seiten 197-206

[5] T. Weber, P. W. Baier, J. Oster, M. Weckerele: Performance Enhancement of Time Division CDMA (TD-CDMA) by Multi-Step Joint Detection; Proceedings 7th International Conference on Telecommunications (ICT00), Bd.2, Acapulco, 2000, Seiten 1038-1044

**Patentansprüche**

1. Verfahren zur Bestimmung einer geschrumpften totalen Mittambelmatrix ( $\underline{\hat{G}}$ ) bei zellulären Zeitmultiplex und/oder Codemultiplex Mobilfunksystemen, bei dem

   • aus einem Empfangsvektor ($\underline{e}_m$), welcher Empfangsignalanteile von a priori bekannten gesendeten Pilotsignalen von allen Mobilfunk-Teilnehmern in einer Referenzzelle und in um die Referenzzelle umliegenden Gleichkanalzellen enthält, erste Schätzungen ($\underline{h}^{(i)}$) der Kanalimpulsantworten oder Schätzungen von charakteristischen Eigenschaften der Kanalimpulsantworten für die Teilnehmer in der Referenzzelle und/oder in den umliegenden Gleichkanalzellen ermittelt werden,
   • anhand der ersten Schätzungen ($\underline{h}^{(i)}$) der Kanalimpulsantworten oder der Schätzungen der charakteristischen Eigenschaften der Kanalimpulsantworten mittels eines vorgegebenen Auswahlkriteriums mehrere Abtastwerte der Kanalimpulsantworten der Teilnehmer in der Referenzzelle und/oder in den umliegenden Gleichkanalzellen ausgewählt werden, und

- eine geschrumpfte totale Mittambelmatrix ($\hat{\underline{G}}$) gebildet wird, in der nur die zu den ausgewählten Kanalimpulsantwort-Abtastwerten gehörenden Spalten einer totalen Mittambelmatrix (<u>G</u>) enthalten sind, welche totale Mittambelmatrix (<u>G</u>) die a priori bekannten teilnehmerspezifischen Pilotsignale sämtlicher Teilnehmer in der Referenzzelle und in den umliegenden Gleichkanalzellen aufweist.

**2.** Verfahren gemäß Anspruch 1,
bei dem die zur ersten Kanalschätzung verwendeten Pilotsignale die Mittambel-Codes eines oder mehrerer aufeinanderfolgender Bursts sind.

**3.** Verfahren gemäß einem der Ansprüche 1 oder 2,
bei dem die zur ersten Kanalschätzung verwendeten Pilotsignale zusätzlich gesendete schmal- oder breitbandige Signatursignale sind.

**4.** Verfahren gemäß einem der Ansprüche 1 bis 3,
bei dem die erste Kanalschätzung mittels

- einer signalangepassten Filterung,
- einer Maximum Likelihood Kanalschätzung und/oder
- einer Minimum Mean Square Error Schätzung erfolgt.

**5.** Verfahren gemäß einem der Ansprüche 1 bis 4,
bei dem als charakteristische Eigenschaft der Kanalimpulsantwort die Energie der Kanalimpulsantwort verwendet wird.

**6.** Verfahren gemäß einem der Ansprüche 1 bis 5,
bei dem als charakteristische Eigenschaft der Kanalimpulsantwort die Energien der Kanalimpulsantwort-Abtastwerte verwendet werden.

**7.** Verfahren gemäß einem der Ansprüche 1 bis 6,
bei dem das Auswahlkriterium darin besteht, dass diejenigen Kanalimpulsantwort-Abtastwerte ausgewählt werden,

- deren geschätzte Energie eine bestimmte Schwelle überschreitet oder
- deren geschätzte Energie zu einer vorgegebenen Anzahl an größten geschätzten Energien gehört.

**8.** Verfahren gemäß einem der Ansprüche 1 bis 7,
eingesetzt zur Bestimmung einer aufgefüllten Kanalimpulsantwort, bei dem

- aus dem Empfangsvektor ($\underline{e}_m$) und aus der geschrumpften totalen Mittambelmatrix ($\hat{\underline{G}}$) mittels eines Kanalschätzverfahrens eine geschrumpfte totale Kanalimpulsantwort ($\hat{\underline{h}}$) bestimmt und
- aus der geschrumpften totalen Kanalimpulsantwort ($\hat{\underline{h}}$) unter Verwendung der ausgewählten Kanalimpulsantwort-Abtastwerte die aufgefüllte Kanalimpulsantwort ($\underline{h}'$) bestimmt wird.

**9.** Verfahren gemäß Anspruch 8,
bei dem die geschrumpfte totale Kanalimpulsantwort ($\hat{\underline{h}}$) mittels

- einer signalangepassten Filterung,
- einer Maximum Likelihood Kanalschätzung und/oder
- einer Minimum Mean Square Error Schätzung ermittelt wird.

**10.** Verfahren gemäß Anspruch 8 oder 9,
bei dem die aufgefüllte Kanalimpulsantwort ($\underline{h}'$) bestimmt wird indem zu der geschrumpften totalen Kanalimpulsantwort ($\hat{\underline{h}}$) Nullmatrizen hinzugefügt werden, welche nicht einbezogene Quellen von Interzellinterferenz repräsentieren.

**11.** Verfahren gemäß einem der Ansprüche 1 bis 10,
eingesetzt zur Bestimmung der übertragenen Daten, bei dem der Empfangsvektor ($\underline{e}_m$) aus einem empfangenen Gesamtsignal selektiert wird, indem diejenigen Bestandteile des empfangenen Gesamtsignals ($\underline{e}_{bu}$) selektiert werden, welche die Pilotsignalanteile aus der Referenzzelle und aus den umliegenden Gleichkanalzellen enthalten.

**12.** Verfahren gemäß Anspruch 11,
bei dem unter Verwendung der aufgefüllten Kanalimpulsantwort ($\underline{h}'$) aus dem empfangenen Gesamtsignal ($\underline{e}_{bu}$) ein Empfangssignal ermittelt wird, indem diejenigen Bestandteile des empfangenen Gesamtsignals eliminiert werden, welche die Pilotsignalanteile aus den umliegenden Gleichkanalzellen enthalten.

**13.** Verfahren gemäß Anspruch 12,
bei dem aus dem Empfangssignal unter Verwendung der ausgewählten Kanalimpulsantwort-Abtastwerte und der aufgefüllten Kanalimpulsantwort ($\underline{h}'$) eine Datenmatrix bestimmt wird, welche die zu bestimmenden übertragenen Daten aufweist.

**14.** Verfahren gemäß Anspruch 13,
bei dem die Datenmatrix unter Verwendung eines Multi-Step Joint Detection Verfahrens bestimmt wird.

**15.** Verfahren gemäß Anspruch 14,
bei dem die Datenmatrix unter Verwendung eines zweistufigen Multi-Step Joint Detection Verfahrens bestimmt wird.

**16.** Vorrichtung zum Bestimmen einer geschrumpften totalen Mittambelmatrix ($\hat{\underline{G}}$) bei zellulären Zeitmultiplex und/ oder Codemultiplex Mobilfunksystemen mittels eines Prozessors, der derart eingerichtet ist, dass folgende Verfahrensschritte durchführbar sind:

- aus einem Empfangsvektor ($\underline{e}_m$), welcher Empfangsignalanteile von a priori bekannten gesendeten Pilotsignalen von allen Mobilfunk-Teilnehmern in einer Referenzzelle und in um die Referenzzelle umliegenden Gleichkanalzellen enthält, werden erste Schätzungen ($\underline{h}^{(i)}$) der Kanalimpulsantworten oder Schätzungen von charakteristischen Eigenschaften der Kanalimpulsantworten für die Teilnehmer in der Referenzzelle und/oder in den umliegenden Gleichkanalzellen ermittelt,
- anhand der ersten Schätzungen ($\underline{h}^{(i)}$) der Kanalimpulsantworten oder der Schätzungen der charakteristischen Eigenschaften der Kanalimpulsantworten mittels eines vorgegebenen Auswahlkriteriums werden mehrere Abtastwerte der Kanalimpulsantworten der Teilnehmer in der Referenzzelle und/oder in den umliegenden Gleichkanalzellen ausgewählt, und
- eine geschrumpfte totale Mittambelmatrix ($\hat{\underline{G}}$) wird gebildet, in der nur die zu den ausgewählten Kanalimpulsantwort-Abtastwerten gehörenden Spalten einer totalen Mittambelmatrix ($\underline{G}$) enthalten sind, welche totale Mittambelmatrix ($\underline{G}$) die a priori bekannten teilnehmerspezifischen Pilotsignale sämtlicher Teilnehmer in der Referenzzelle und in den umliegenden Gleichkanalzellen aufweist.

**17.** Computerprogramm oder Element eines Computerprogramms zum Bestimmen einer geschrumpften totalen Mittambelmatrix ($\hat{\underline{G}}$) bei zellulären Zeitmultiplex und/oder Codemultiplex Mobilfunksystemen, welches einen Computer dazu veranlasst, ein Verfahren auszuführen, welches die folgenden Schritte aufweist:

- aus einem Empfangsvektor ($\underline{e}_m$), welcher Empfangsignalanteile von a priori bekannten gesendeten Pilotsignalen von allen Mobilfunk-Teilnehmern in einer Referenzzelle und in um die Referenzzelle umliegenden Gleichkanalzellen enthält, werden erste Schätzungen ($\underline{h}^{(i)}$) der Kanalimpulsantworten oder Schätzungen von charakteristischen Eigenschaften der Kanalimpulsantworten für die Teilnehmer in der Referenzzelle und/oder in den umliegenden Gleichkanalzellen ermittelt,
- anhand der ersten Schätzungen ($\underline{h}^{(i)}$) der Kanalimpulsantworten oder der Schätzungen der charakteristischen Eigenschaften der Kanalimpulsantworten mittels eines vorgegebenen Auswahlkriteriums werden mehrere Abtastwerte der Kanalimpulsantworten der Teilnehmer in der Referenzzelle und/oder in den umliegenden Gleichkanalzellen ausgewählt, und
- eine geschrumpfte totale Mittambelmatrix ($\hat{\underline{G}}$) wird gebildet, in der nur die zu den ausgewählten Kanalimpulsantwort-Abtastwerten gehörenden Spalten einer totalen Mittambelmatrix ($\underline{G}$) enthalten sind, welche totale Mittambelmatrix ($\underline{G}$) die a priori bekannten teilnehmerspezifischen Pilotsignale sämtlicher Teilnehmer in der Referenzzelle und in den umliegenden Gleichkanalzellen aufweist.

**18.** Computerlesbares Medium mit einem gespeicherten Programm oder einem gespeicherten Programmelement zum Bestimmen einer geschrumpften totalen Mittambelmatrix ( $\hat{\underline{G}}$ ) bei zellulären Zeitmultiplex und/oder Codemultiplex Mobilfunksystemen, wobei das Programm oder das Programmelement den Computer dazu veranlasst, ein Verfahren auszuführen, welches die folgenden Schritte aufweist:

- aus einem Empfangsvektor ($\underline{e}_m$), welcher Empfangsignalanteile von a priori bekannten gesendeten Pilotsignalen von allen Mobilfunk-Teilnehmern in einer Referenzzelle und in um die Referenzzelle umliegenden Gleichkanalzellen enthält, werden erste Schätzungen ($\underline{h}^{(i)}$) der Kanalimpulsantworten oder Schätzungen von charakteristischen Eigenschaften der Kanalimpulsantworten für die Teilnehmer in der Referenzzelle und/oder in den umliegenden Gleichkanalzellen ermittelt,

- anhand der ersten Schätzungen ($h^{(i)}$) der Kanalimpulsantworten oder der Schätzungen der charakteristischen Eigenschaften der Kanalimpulsantworten mittels eines vorgegebenen Auswahlkriteriums werden mehrere Abtastwerte der Kanalimpulsantworten der Teilnehmer in der Referenzzelle und/oder in den umliegenden Gleichkanalzellen ausgewählt, und

- eine geschrumpfte totale Mittambelmatrix ( $\hat{\underline{G}}$ ) wird gebildet, in der nur die zu den ausgewählten Kanalimpulsantwort-Abtastwerten gehörenden Spalten einer totalen Mittambelmatrix ($\underline{G}$) enthalten sind, welche totale Mittambelmatrix ($\underline{G}$) die a priori bekannten teilnehmerspezifischen Pilotsignale sämtlicher Teilnehmer in der Referenzzelle und in den umliegenden Gleichkanalzellen aufweist.

# FIG 1

Mittambel-Selektion ~110

Eliminieren der Mittambel-interferenz

$\underline{e}_{bu}$

$\underline{e}_m$

$\underline{e}_d^{(1)}$

$\underline{e}_d^{(2)}$

Multi-Step Joint Detection

$\underline{d}_u$

100

150

160

170

180

121

MF-Kanal-bestimmung Gleichkanalzelle 1

$\underline{h}^{(1)}$

MF-Kanal-bestimmung Gleichkanalzelle 6

$\underline{h}^{(6)}$

Bestimmung Selektionsmatrix

130

140

$\underline{\hat{G}}$

Schrumpfen der Mitteambelmatrix

$\underline{G}$

ML-Kanal-bestimmung

$\underline{\hat{h}}$

Auffüllen der Kanalimpuls-antwort

$\underline{h}'$

$\alpha$

120

126

# FIG 2

**Europäisches Patentamt**

# EUROPÄISCHER RECHERCHENBERICHT

Nummer der Anmeldung

EP 01 11 1003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 970 060 A (BAIER PAUL-WALTER ET AL) 19. Oktober 1999 (1999-10-19) <br> * Zusammenfassung * <br> * Spalte 1, Zeile 7 – Zeile 49 * <br> * Spalte 2, Zeile 1 – Zeile 20 * <br> * Spalte 2, Zeile 63 – Spalte 3, Zeile 33 * <br> * Spalte 3, Zeile 65 – Spalte 4, Zeile 40 * <br> * Spalte 12, Zeile 43 – Zeile 47 * <br> * Ansprüche 1,2 * | 1-18 | H04L25/02 |
| A | US 5 933 768 A (HOOK MIKAEL ET AL) 3. August 1999 (1999-08-03) <br> * Zusammenfassung * <br> * Spalte 1, Zeile 6 – Zeile 37 * <br> * Spalte 2, Zeile 16 – Zeile 19 * <br> * Spalte 2, Zeile 33 – Zeile 50 * <br> * Spalte 2, Zeile 63 – Spalte 3, Zeile 4 * <br> * Spalte 3, Zeile 14 – Zeile 31 * <br> * Spalte 3, Zeile 55 – Spalte 4, Zeile 9 * <br> * Spalte 4, Zeile 41 – Spalte 5, Zeile 27 * <br> * Anspruch 1 * | 1-18 | |
| A | EP 1 059 784 A (LUCENT TECHNOLOGIES INC) 13. Dezember 2000 (2000-12-13) <br> * Zusammenfassung * <br> * Seite 2, Absatz 1 – Absatz 12 * <br> * Ansprüche 1-7 * | 1-18 | RECHERCHIERTE SACHGEBIETE (Int.Cl.7) <br><br> H04L <br> H04B |

Der vorliegende Recherchenbericht wurde für alle Patentansprüche erstellt

| Recherchenort | Abschlußdatum der Recherche | Prüfer |
|---|---|---|
| DEN HAAG | 12. Oktober 2001 | Reilly, D |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 11 1003

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 5970060 | A | 19-10-1999 | EP | 0767543 A2 | 09-04-1997 |
| US 5933768 | A | 03-08-1999 | AU | 6640698 A | 18-09-1998 |
| | | | CN | 1249864 T | 05-04-2000 |
| | | | EP | 1012991 A1 | 28-06-2000 |
| | | | JP | 2001513956 T | 04-09-2001 |
| | | | WO | 9838750 A1 | 03-09-1998 |
| EP 1059784 | A | 13-12-2000 | EP | 1059784 A1 | 13-12-2000 |
| | | | AU | 3179700 A | 02-01-2001 |
| | | | WO | 0077993 A1 | 21-12-2000 |

EPO FORM P0461

Für nähere Einzelheiten zu diesem Anhang : siehe Amtsblatt des Europäischen Patentamts, Nr. 12/82